# EUROPEAN PATENT APPLICATION

(11) **EP 3 922 978 A1**
(43) Date of publication of application: **15.12.2021**
(21) Application number: 19719538.1
(22) Date of filing: 05.02.2019
(51) Int. Cl.: G01N 15/06, G01N 21/64, C12Q 1/00, C12M 1/34

(54) **OPTICAL DEVICE FOR DETECTING FLUORESCENCE EMISSION**

(71) Applicant: Fundació Institut de Ciències Fotòniques, 08860 Castelldefels (Barcelona) (ES); Institució Catalana De Recerca I Estudis Avançats (ICREA), 08010 Barcelona (ES)
(72) Inventor: PRUNERI, Valerio, 08860 Casteldefels, Barcelona (ES); PÉREZ ROSAS, Juan Miguel, 08860 Casteldefels, Barcelona (ES); SIBILO, Rafaël, 08860 Casteldefels, Barcelona (ES); HURTH, Cedric, 08860 Casteldefels, Barcelona (ES)
(74) Representative: Grünecker Patent- und Rechtsanwälte PartG mbB
(86) International application number: PCT/ES2019/070058
(87) International publication number: WO 2020/161364

(57) **Abstract**

The present invention relates to an optical device for the detection of fluorescence emission from a sample of particulates, comprising a light source configured to emit a light beam towards the sample of particulates, a color filter and an interference filter both being configured to filter light coming from the sample of particulates and a complementary metal-oxide semiconductor, CMOS, image sensor configured to detect light passed through the color filter and the interference filter. The device is particularly adapted for surface measurements.

## Description

### Field of Invention

The present invention relates to an optical device for the detection of fluorescence emission in, for example, a surface arrangement. In particular, it proposes a cytometer configured for detecting fluorescence emission from a sample of micro-organisms.

### Background of the invention

Detecting minute quantities of particular particulates in sample is of importance in a variety of technical fields. In particular, the accurate detection of micro-organisms with respect, for example, to hygienic demands, is an issue of growing interest for instruments and environments in hospitals, for instance. In fact, monitoring the early onset of bacteria film formation is of paramount importance in many clinical, environmental, or food quality control applications.

Besides magneto-elastic biosensors and electrochemical sensors, optical technologies configured for determining minute quantities of particulates as micro-organisms are known in the art. The optical techniques comprise spectroscopic measurements based on Raman scattering, surface-enhanced Raman scattering, and fluorescence microscopy, such as in the form of flow cytometers. However, the known optical techniques, particularly the ones based on fluorescence microscopy require relatively bulky and costly components and/or suffer from an insufficient resolution, field-of-view, limit-of-detection, depth-of-field, and/or accuracy of measurement depending on the actual configuration. Even if a satisfying accuracy is achieved, the solutions of the prior art suffer from cumbersome sample preparation and are not suitable for direct measurement in the field.

In view of the above, it is an object of the present invention to provide a portable optical device that alleviates the mentioned problems at low costs.

### Description of the Invention

The present invention addresses the above-mentioned problems by providing an optical device for the detection of fluorescence emission from a sample of particulates, comprising a light source (for example, a light emitting diode, LED, device or LED array device) configured to emit a light beam towards the sample of particulates and a color filter and an interference filter (single-band or multi-band) both being configured to filter light coming from the sample of particulates. The optical device further comprises a complementary metal-oxide semiconductor, CMOS, image sensor configured to detect light passed through a color filter and an interference filter. The CMOS image sensor may be replaced by single-photon avalanche diode (SPAD) arrays, and any photodetector arrays that have proven to be very reliably operating sensing means. The optical device may further comprise programmable data processing means for processing data provided by the CMOS image sensor.

The optical device can, for example, be a cytometer and the sample can be a specimen of living cells, in particular, micro-organisms and, more particularly, bacteria. The sample can be or comprise a microfilm or biofilm. By means of the herein disclosed configuration, a low-cost, small, and portable device can be provided that allows for a speedy and reliable determination of the fluorescence emission emitted by a sample of particulates and, thereby, the quantification of the particulates. Particularly, the disclosed optical device is suitable for in-situ measurements in the field.

According to an embodiment, the CMOS image sensor, contrary to the prior art, does not include an expensive high magnification lens assembly over the sensing elements of the CMOS image sensor in order to drastically increase the depth-of-field and field-of-view and overcome a major limitations of existing microscopes. By means of the configuration provided herein a desirable field-of-view, resolution, and limit-of-detection can be achieved without a complex lens mounted over the sensing elements of the CMOS image sensor and being part of the same.

Furthermore, the optical device may comprise an imaging lens configured and arranged to collimate light onto the CMOS image sensor surface that has previously passed through the color filter and the interference filter. In particular, the imaging lens can be configured and arranged to cause a field-of-view of the CMOS image sensor of at least 250 mm² and at least 300 mm². Thereby, limitations known from spectrophotometry and fluorescence microscopy of the art can be overcome and direct measurement without the need for complex image post-processing can be provided. Moreover, the thus specified configuration allows for rapidly constructing a growth curve for micro-organisms in the case where such micro-organisms represent the particulates.

According to a further embodiment, the optical device further comprises an imaging (collimation) lens configured and arranged to collimate the light beam emitted by the light source and an excitation filter configured and arranged to filter the light beam collimated by the collimation lens. The light beam is efficiently collimated to the sample of particulates by means of the collimation lens. No further optical elements (particularly, no polarization filtering means) are needed between the sample and the CMOS image sensor.

All of the above-described embodiments of the inventive optical device may further comprise simple and fast processing means (for example a general purpose processor running an appropriate software program product) that is configured to derive a growth rate of living cells (representing the particulates) from data supplied by the CMOS image sensor. For deriving the growth rate the population of the living cells, for example, the concentration of micro-organisms like bacteria, has to be determined based on the data provided by the CMOS image sensor at different predetermined times.

In addition, a method of detecting fluorescence emission from a sample of particulates is provided and comprises: radiating an excitation beam onto the sample of particulates in order to cause the fluorescence emission from the sample of particulates, filtering light coming from the sample of particulates by means of a color filter and an interference filter (in particular, in order to block light of the excitation beam passing the sample), and detecting light coming from the sample of particulates and filtered by the color filter and the interference filter (i.e., basically the fluorescence light) by a complementary metal-oxide semiconductor, CMOS, image sensor. The particulates may be living cells, in particular, micro-organisms, and more particularly, bacteria and the sample may be provided in the form of a microfilm or biofilm. The above-described embodiments of the inventive optical device can be used for carrying out this method and the method steps mentioned below.

The method may further comprise generating the excitation beam by radiating a light beam from a light emitting diode, LED, device, in particular, comprising an LED array, and filtering the light beam radiated by the LED device by an excitation filter (which may be provided in form of an interference filter).

According to an embodiment, the method further comprises collimating the light filtered by the color filter and the interference filter by an imaging lens and arranging the imaging lens such that a field-of-view of the CMOS image sensor of at least 250 mm², and in particular, 300 mm², is obtained.

When the particulates are bacteria or other micro-organisms and the sample, in particular, is a biofilm of bacteria, the method may comprise monitoring surface bacteria (or other micro-organism) growth in real-time based on data provided by the CMOS image sensor, wherein monitoring the surface bacteria (or other micro-organism) growth, in particular, comprises generating a growth curve for the bacterial (or other micro-organism) culture.

Furthermore, it is provided a computer program product comprising one or more computer readable media having computer-executable instructions for performing the steps of the method according to one of the above-described embodiments when run on a processor means.

The method according to one of the embodiments described above may further comprise preparing the sample of particulates by forming a biofilm on a transparent or semi-transparent substrate, including glass or polymer substrates.

Additional features and advantages of the present invention will be described with reference to the drawings. In the description, reference is made to the accompanying figures that are meant to illustrate preferred embodiments of the invention. It is understood that such embodiments do not represent the full scope of the invention.
Figure 1 schematically illustrates an optical device comprising an LED light source and a CMOS image sensor according to an embodiment of the present invention.
Figure 2 is a flow chart illustrating a method of detecting fluorescence emission from a sample of particulates according to an embodiment of the present invention.
Figures 3A and 3B show a comparison of growth curves obtained by conventional absorbance measurements (Figure 3A) and by an embodiment of the inventive optical device (Figure 3B).

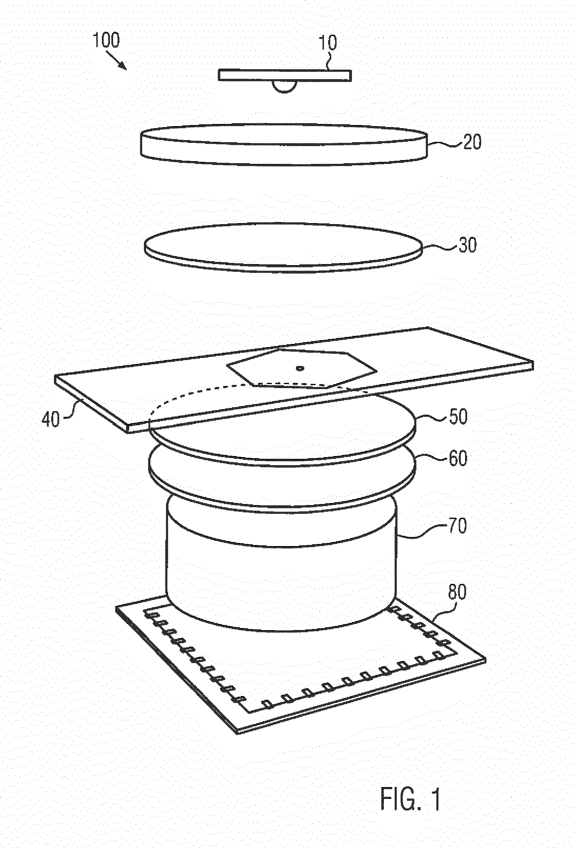

The present invention provides a relatively small, portable optical device (in particular, a surface cytometer) that allows for a relatively accurate detection of fluorescence emission from a sample of particulates at relatively low costs. Figure 1 illustrates an embodiment of such an optical device 100. The optical device 100 comprises a light source 10. The light source 10 can be an incoherent light source formed of an LED device that may comprise an LED array. A free space high power LED may be used for the light source 10. Output powers of some mW are suitably chosen. In general, wavelengths from the ultraviolet to the infrared range of the light spectrum and output powers ranging up to some watt are envisaged.

Light emitted by the light source 10 is collimated by a collimation lens 20. The collimation lens 20 may be an achromatic lens. The achromatic lens may have a focal length of 50 nm, for example. Further, the optical device 100 comprises an excitation filter 30. The excitation filter 30 may be a (thin-film) interference filter. The excitation filter 30 may have one or more band-pass regions, in principle. For example, the excitation filter 30 may provide for a light beam with a center wavelength of 466 nm with a bandwidth of 40 nm.

The excitation beam resulting from the collimation by the collimation lens 20 and filtering by the excitation filter 30 of the light beam emitted by the light source 10 hits a sample of particulates 40. The sample may be a horizontally extending biofilm comprising micro-organisms as, for example, bacteria. When hitting the sample 40 the excitation excites fluorescence emission of the particulates of the sample 40.

Downstream along the vertical optical axis of the optical device 10, a color filter 50 and an emission filter 60 built in form of an interference filter are arranged, for example, in the named order. The emission filter may be made by depositing thin layers of specialized materials onto a flat filter substrate. The filter substrate may be a glass or fused silica/quartz substrate. Alternating layers of high and low refractive index materials, each typically an integral multiple of one-quarter wavelength in thickness, may be formed on the filter substrate. By careful selection of thickness and refractive index values for the various layers, controlled interference of light waves reflected at each layer interface can be utilized to enable the filter to reflect specific wavelengths while transmitting others. The color filter 50 may be a green color filter. It goes without saying that the color of the color filter 50 is to be selected in accordance with the fluorescence spectrum of the sample of particulates 40. Common filter colors are blue or pale yellow in the U-block, green or deep yellow in the B-block, and orange or red in the G-block.

The emission filter 60 may be an interference filter with a center wavelength of 526 nm and a bandwidth of 53 nm. Other appropriate wavelengths that might be chosen in accordance with the corresponding light source, e.g. LED device with emission wavelength of 490 nm, 625 nm, or 810 nm. The color filter 50 and the emission filter 60 are provided in order to block light of the excitation beam hitting the surfaces of the filters at all angles. The optical characteristics of the emission filter 60 must be carefully matched to those of the excitation filter 30 in order to achieve the level of excitation wavelength rejection necessary to allow the relatively weak fluorescence emission signal to be recorded. In fact, it is the combination of both the color filter 50 and the emission filter 60 that achieves the proper suppression of the excitation wavelength of the excitation beam. Even with a high power, badly or even non-collimated beam, this combination of filters allows to remove the excitation light hitting the surface of the filters at all angles, thereby improving the signal-to-noise-ratio despite a peak transmission coefficient of about 70% for the color filter 50, for example.

Downstream along the vertical optical axis of the optical device 10, an imaging lens 70 is arranged. The imaging lens 70 collimates the light that passed through the color filter 50 and the emission filter 70 onto a surface sensing plane of a CMOS image sensor 80. The imaging lens 70 may be equipped with a manual focus and an iris and may have an effective focal length of 6 mm. The imaging lens 70 can be configured and arranged to provide for a field-of-view of more than 250 mm², and in particular, at least 300 mm² and a spatial resolution of the CMOS image sensor 80 of 280 µm (determined using a positive 1951 USAF test target), for example.

The CMOS image sensor 80 may comprise single-photon avalanche diode, SPAD, photodetector arrays. However, according to a particular embodiment the lens usually provided over the sensing elements of the CMOS image sensor 80 is removed. The CMOS image sensor 80 may make use of a Bayer filter configuration to structure its pixels. Every 2 x 2 neighboring pixels contain one red, one blue, and two green pixels. A single capture consists of four two-dimensional arrays with a size of 1640 x 1232 pixels with 10 bits for each pixel, for example. The exposure time and gain of the CMOS image sensor 80 can be adjusted using the software, for example. The CMOS image sensor 80, according to an example, is a 4.6-mm diagonal sensor with a pixel array of 3280 x 2464 pixels known as version 2 of the Raspberry Pi camera module.

A control and data processing electronics (not shown in Figure 1) is also comprised by the optical device 100. The control and data processing electronics may be based on a Raspberry Pi 3 Model B, which processes the electronic signal acquired after detection by the CMOS image sensor 80 in order to provide a fluorescence count proportional to the sample emission level. The Raspberry Pi includes general-purpose input/outputs (GPIOs) to connect miscellaneous other electronic components as desired. A printed circuit board (PCB) can be designed to control the light source 10. A nominal current of 1A and a forward voltage drop of 3.5 V may be used to drive the incoherent light source 10. A power supply of 5 V at 5 A may feed the entire optical device 100.

The overall configuration of the optical device 100 shown in Figure 1 may have a height (along the vertical optical axis) of about 20 cm and total dimension of about 20 cm x 20 cm x 10 cm. The individual optical components can be mounted on appropriate precision holders (not shown in Figure 1). The optical device 100 has the ability to monitor the early onset of bacteria film formation in clinical, environmental or food quality control applications.

Main advantages, provided by the optical device 100, besides size, portability and costs, include a large field-of-view of at least 300 mm² and a relatively large depth of field that overcome the limitations of techniques known in the art like spectrophotometry and fluorescence microscopy. A limit-of-detection of about 10⁴ cells/mm² can be achieved, which is well in line with the prior art. In addition, the optical device 100 provides a direct measurement without the need for complex image post-processing. The optical device 100 allows for rapidly constructing a growth curve for micro-organisms as bacteria. Simple sample preparation and a rapid measurement time (< 1 min) enable real-time monitoring of biofilms to control their formation on various surfaces including hospital instruments, food, and pipes in water treatment plants.

Figure 1 presents the device working in transmission mode. Alternatively, a reflection mode configuration can be arranged for surfaces that are not transparent (e.g. metal surfaces or thin films). For this, the excitation light path and the detection path need to be located on the same side and on top of the sampled surface. There are several ways to achieve this: slightly tilting the excitation and detection paths, using different polarizations in each paths, and using mirrors to redirect the light to the detector. The final setup for detecting fluorescence from reflective surfaces may involve any or a combination of the above-mentioned elements.

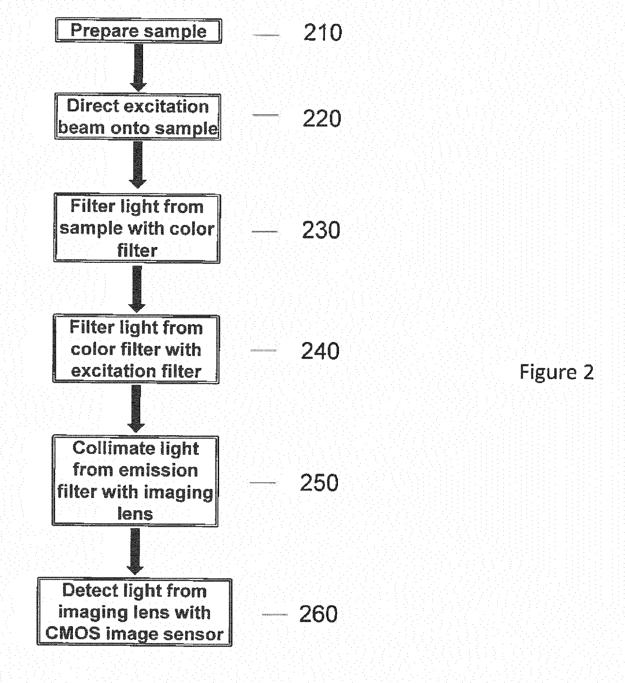

A method of detecting fluorescence emission from a sample of particulates is illustrated in Figure 2. In step 210 a sample is prepared. A concrete example for sample preparation is given in the description below. A surface sample can be formed on a substrate (carrier). The substrate can be a low-expensive glass substrate. For example, a biofilm can be formed on the substrate. Fluorophores can be added to the sample surface where the particulates are located. The fluorophores can be DNA-intercalating dyes, such as, for example, SYBR Green.

The sample is irradiated by an excitation light beam 220. The excitation beam can be formed from a light beam emitted by an LED device, for example, the light source 10 shown in Figure 1, and a collimation lens and an excitation filter, for example, collimation lens 20 and excitation filter 30 shown in Figure 1. The excitation beam causes emission of fluorescence light from the particulates of the sample, for example, sample 40 shown in Figure 1.

Light coming from the sample is filtered 230 by a color filter, for example, color filter 50 of the optical device 100 shown in Figure 1. Light filtered by the color filter is filtered 240 by an emission filter, for example, emission filter 60 shown in Figure 1. The color filter and emission filter effectively block light from the excitation beam that passes through the sample. The light that passed through the color filter and the emission filter is collimated 250 by an imaging lens on a surface sensing plane of a CMOS image sensor configured for detecting 260 the light coming from the imaging lens. The emission filter 70 and the CMOS image sensor 80 of the optical device 100 shown in Figure 1 can be used.

In the following a specific example for the operation of an optical device is described in some detail.

### Example

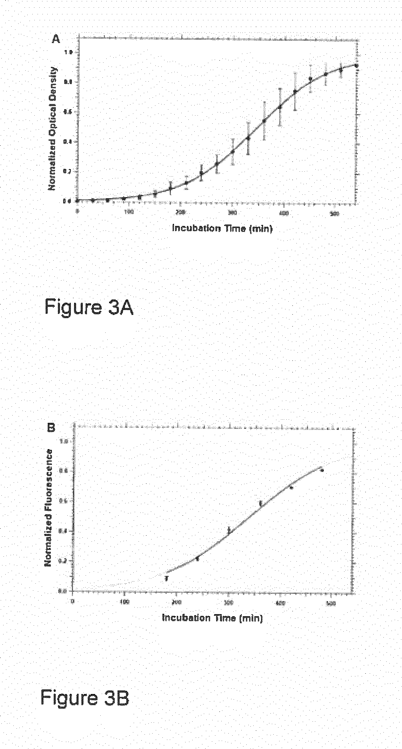

- Specifications of the optical device: The light source is a free space high power LED, which is band-limited using an interference filter with a center wavelength of 466 nm and a bandwidth of 40 nm. An achromatic lens with a focal of 50 mm, an interference filter (working as an emission filter) with a center wavelength of 526 nm and a bandwidth of 53 nm, a green color filter, and an imaging lens with an effective focal length of 6 mm equipped with a manual focus and an iris are used.
   The imaging lens was used to focus the detection on the surface plane and was arranged to obtain a field-of-view of 300 mm² and a spatial resolution of 280 µm using a positive 1951 USAF test target. The CMOS image sensor is a 4.6-mm diagonal sensor with 3280 x 2464 pixels, also known as version 2 of the Raspberry Pi camera module, with the lens that is originally mounted over the sensing elements being removed.
- Bacteria Growth and Incubation: To prepare the analyzed samples and model situations of rapid proliferation of an opportunistic pathogen, *Escherichia coli* (Invitrogen DH5 alpha strain) was grown at 37°C in LB Broth medium (Scharlau 02-384-500) with an incubator shaker (Thermo Fisher Scientific MaxQ8000).
   The bacterial growth was controlled by monitoring the optical density with a spectrophotometer (Thermo Fisher Scientific Nanodrop 2000c). The optical density was measured at 600 nm. The bacteria growth was monitored over the course of 8 hours. For each time analyzed, an aliquot of the culture was stained and measured with the optical device without further processing. Each aliquot was processed in triplicates and three acquisitions were averaged for each measurement.
- Bacteria Nucleic Acid Staining: In order to monitor bacteria growth with the optical device, *E. coli* cells were labeled with a fluorescent nucleic acid stain, namely SYBR Green 1 (SG), from a 10,000X concentrate stock solution (Invitrogen S7563) in dimethyl sulfoxide (DMSO). SG has a peak absorption at 490 nm and a peak emission at 520 nm. SG intercalates within double-stranded DNA helixes without specificity. When it is bound to DNA, the fluorescence is increased by several orders of magnitude. 10 µl of SG stock solution were dissolved into 100 µl of phosphate buffered saline (PBS, Sigma-Aldrich P4417).
   Each 1 ml of sample was treated with 1 µl. Before each measurement, the samples were incubated for 20 minutes at room temperature. For the purposes of growth monitoring, samples are labeled and measured at different values of the optical density, and the surface cytometry results are compared to results obtained with the spectrophotometer and a fluorescence microscope (Nikon Ti inverted microscope with an Andor iXon camera).
- Surface measurement: For the measurements with the optical device, the sample surfaces were prepared by combining borosilicate cover slips with a 100 µm thickness (Knittel Glass) with silicon isolators (Grace Bio-labs GBL665301) to confine the sample to an area larger than the instrument field-of-view. Since the attention turned to the aggregated effect of the cells on the surface, signal processing was limited to obtain a fluorescence count from the sample. It was correlated to a concentration of bacteria in cells/mm² or used to build a complete growth curve similarly to the comparative measurements with the spectrophotometer. For characterization and comparison purposes, the samples were also imaged with a fluorescent microscope.
- Results: One of the most standard methods to measure bacterial growth is using absorbance measurements. Figure 3A shows the average growth curve obtained by averaging individual growth curves measured over several experiments carried out over several weeks growing *Escherichia coli* in liquid LB at 37 °C and collecting an aliquot (1 mL) at the indicated times to perform the absorbance measurement (optical density) at 600 nm.
   The data is reported in terms of changes in the optical density, which takes into account various phenomena including scattering and absorption that modify the intensity of the light transmitted by a medium with respect to the incident light flux. The error bars obtained originate from experiments performed on different days with cells in different dormant states prior to seeding the LB culture medium. The resulting curve is a fit to a logistic population growth model yielding a seed ratio of the inoculum size to the carrying capacity *x₀* = 0.0077 ± 0.001 and a maximum growth rate r= 0.0140 ± 0.0004 s⁻¹.
   A culture aliquot from the same batch was stained with SYBR Green and deposited on the sensing surface of the optical device. The field-of-view is much larger than in a conventional fluorescence microscope, which allows a better averaging of the fluorescent signal from bacteria present in the stained aliquot. In addition, the use of an imaging lens rather than a microscope objective for sample interrogation allows larger depths of fields and the fluorescence measurement is not constrained to a thin volume on the surface as in fluorescence microscopy. Therefore, the reported mean fluorescent signal reported by the system provides a better assessment of the number of bacteria present in the culture aliquot.
   Because the permeable SYBR Green dye binds very reliably to DNA material in each bacteria with high efficiency (> 99% of individual bacteria labeled), it can be assumed that the fluorescence signal averaged over the large field of view of the cytometer reader is directly proportional to the number of bacteria present. This indicates that, similarly to the optical density measurement, the available models for bacterial growth apply to experimental situation.
   In addition, in order to compare optical density and fluorescence measurements obtained from by the optical device, the measurement signal is processed to obtain *I*(t) = In(*C*(t)/*C₀*). C is the intensity of the signal averaged over the entire CMOS image sensor at incubation time *t* and *C₀* is the signal averaged of the CMOS sensor before any sample is introduced and is analogous to the incident light power used for optical density measurements. /(t) constitutes a direct measurement and does not require complex image post-processing.
   Figure 3B shows the typical growth curve obtained by the inventive optical device and the fit to a logistic population growth model. Data points below the known limit-of-detection were ignored in the fit and omitted from Figure 3B. For comparison purposes, the first reliable data point for the growth curve obtained by the cytometer was offset to overlap with the optical density curve.
   The growth curve and yields *x₀* = 0.017 ± 0.005 and *r* = 0.0120 ± 0.0009 s⁻¹. The error bars represent ±2*σ* where *σ* is the standard deviation. The lag phase is slightly shorter than for the optical density measurement and is likely due to the lack of sensitivity for weak signals when only a few bacteria are present. The onset of the exponential growth phase and its duration before reaching the stationary phase are, however, well in line with those obtained by absorbance measurements. The stationary phase plateau is slightly more pronounced than for the absorbance curve, which could originate from signal saturation on the CMOS sensor. The experiment clearly proves the overall accuracy of measurements and the determination of a growth curve of a bacterial culture by the inventive optical device.

All previously discussed embodiments are not intended as limitations but serve as examples illustrating features and advantages of the invention. It is to be understood that some or all of the above described features can also be combined in different ways.

## Claims

1. An optical device for the detection of fluorescence emission from a sample of particulates located on a surface, comprising
a light source configured to emit a light beam towards a surface where a sample of particulates is located;
a color filter and an interference filter both being configured to filter light coming from the sample of particulates on a surface; and
a complementary metal-oxide semiconductor, CMOS, image sensor configured to detect light passed through the color filter and the interference filter.

2. The optical device according to claim 1, wherein the CMOS image sensor has sensing elements and no complex expensive lens mounted over the sensing elements.

3. The optical device according to claim 1 or 2, further comprising an imaging lens configured and arranged to collimate light to the CMOS image sensor that has passed through the color filter and the interference filter.

4. The optical device according to claim 3, wherein the imaging lens is configured and arranged to cause a field-of-view of the CMOS image sensor of at least 250 mm², and in particular, at least 300 mm².

5. The optical device according to one of the preceding claims, further comprising a collimation lens configured and arranged to collimate the light beam emitted by the light source and an excitation filter configured and arranged to filter the light beam emitted by the light source and collimated by the collimation lens.

6. The optical device according to one of the preceding claims, wherein the light source is a light emitting diode, LED, device, in particular, comprising an LED array.

7. The optical device according to one of the preceding claims, wherein the CMOS image sensor comprises a single-photon avalanche diode, an SPAD, photodetector arrays.

8. The optical device according to one of the preceding claims, wherein the sample of particulates located on a surface is a sample of living cells, in particular, micro-organisms, more particularly, bacteria and wherein the sample is or comprises, in particular, a microfilm or biofilm.

9. The optical device according to claim 8, further comprising data processing means configured to derive a growth rate of cells living on a surface from data supplied by the CMOS image sensor.

10. A method of detecting fluorescence emission from a sample of particulates located on a surface, comprising the steps of:
radiating an excitation beam onto the sample of particulates in order to cause the fluorescence emission from the sample of particulates;
filtering light coming from the sample of particulates on a surface by means of a color filter and an interference filter; and
detecting light coming from the sample of particulates on a surface and filtered by the color filter and the interference filter by a complementary metal-oxide semiconductor, CMOS, image sensor.

11. The method according to claim 10, further comprising generating the excitation beam by radiating a light beam from a light emitting diode, LED, device, in particular, comprising an LED array, and filtering the light beam radiated by the LED device by an excitation filter.

12. The method according to claim 10 or 11, wherein the particulates are living cells, in particular, micro-organisms, more particularly, bacteria and wherein the sample is or comprises, in particular, a microfilm or biofilm.

13. The method according to one of the claims 10 to 12, further comprising collimating the light filtered by the color filter and the interference filter by an imaging lens and arranging the imaging lens such that a field-of-view of the CMOS image sensor of at least 250 mm², in particular, at least 300 mm², is obtained.

14. The method according to one of the claims 10 to 13, wherein the particulates are micro-organisms, in particular, bacteria, and the sample, in particular, is a biofilm of micro-organisms or bacteria, and further comprising monitoring surface growth of the micro-organisms in real time based on data provided by the CMOS image sensor, wherein monitoring the surface growth, in particular, comprises generating a growth curve for the micro-organisms.

15. The method according to one of the claims 10 to 14, further comprising preparing the sample of particulates by forming a biofilm on a glass substrate.

16. A computer program product comprising one or more computer readable media having computer-executable instructions for performing the steps of the method according to one of the claims 10 to 14 when run on a processor means.
